# EUROPÄISCHE PATENTSCHRIFT

(11) **EP 2 841 795 B1**
(45) Veröffentlichungstag und Bekanntmachung des Hinweises auf die Patenterteilung: **09.06.2021**
(21) Anmeldenummer: 13725901.6
(22) Anmeldetag: 23.04.2013
(51) Int. Cl.: F16G 11/02

(54) **KRAFTÜBERTRAGUNGSEINHEIT**
FORCE TRANSMISSION UNIT
UNITÉ DE TRANSFERT DE FORCE

(30) Priorität: 23.04.2012 DE 102012103540
(43) Veröffentlichungstag der Anmeldung: 04.03.2015
(73) Patentinhaber: Casar Drahtseilwerk Saar GmbH, 66459 Kirkel (DE)
(72) Erfinder: WEIRICH, Johannes, 66125 Saarbrücken (DE)
(74) Vertreter: Patentanwälte Bernhardt / Wolff Partnerschaft mbB
(86) Internationale Anmeldenummer: PCT/DE2013/100148
(87) Internationale Veröffentlichungsnummer: WO 2013/159771

(56) Entgegenhaltungen:
- WO-A1-2011/103640
- DE-A1- 2 230 276
- FR-A- 1 280 990
- US-A- 3 844 923

## Beschreibung

Die Erfindung betrifft eine Kraftübertragungseinheit, die ein Seil, insbesondere ein Drahtseil, und eine Einrichtung zur Einleitung einer Kraft in das Seil aufweist und eine einen Endabschnitt des Seils umschließende und unter Umformung mit dem Seil verbundene Hülse umfasst, wobei ein zwischen der Hülse und dem Seil angeordnetes Verbindungsglied vorgesehen ist, das aus einem Material gebildet ist, welches eine geringere Festigkeit aufweist als die Materialien, aus denen die Hülse und eine Außenfläche des Seils gebildet sind.
Die Erfindung betrifft ferner ein Mittel zur Bildung der Kraftübertragungseinheit und ein Verfahren zur Herstellung der Kraftübertragungseinheit.

Eine solche Kraftübertragungseinheit ist aus der DE 2 230 276 A1 bekannt, die eine Zwischen- oder Endmuffe für Drahtseile beschreibt, bei der ein Teil des Drahtseils innerhalb einer Bohrung der Muffe von einem im wesentlichen rohrförmigen Teil aus duktilem Material umschlossen ist und die Muffe, die aus einem härterem Material besteht als das rohrförmige Teil, das rohrförmige Teil fest umgreift, welches seinerseits in das Seil oder die Litze eingreift, wobei sich ein im wesentlichen ringförmiges Element aus deformierbarem Material dem Ende des rohrförmigen Teils benachbart in die Bohrung erstreckt.

Eine weitere Kraftübertragungseinheit der eingangs genannten Art ist aus der WO 2011/103 640 A1 bekannt. Zwischen einer Hülse und einem Drahtseil wird eine Aluminiumbuchse eingesetzt und die Hülse mittels eines Presswerkzeugs auf das Drahtseil aufgepresst.

Ferner sind durch Benutzung Kraftübertragungseinheiten bekannt, deren Hülse, die üblicherweise als Endverbindung bezeichnet wird, zur Verbindung des Seils mit einem Gegenstand, der mit dem Seil zusammenwirken soll, und zur gegenseitigen Übertragung von Kräften zwischen dem Seil und dem Gegenstand dient. Insbesondere zur Herstellung einer Endverbindung für ein Drahtseil wird die Hülse, die normalerweise aus Baustahl besteht, direkt auf das Drahtseil aufgepresst. Problematisch ist, dass insbesondere bei Drahtseilen, zu deren Herstellung Drahtlitzen aus Stählen großer Festigkeit verwendet werden, die Gefahr besteht, dass im Bereich der Endverbindung Beschädigungen am Seil auftreten und das Seil bricht.

Der Erfindung liegt die Aufgabe zugrunde, eine besser gegen Beschädigungen geschützte Kraftübertragungseinheit der eingangs genannten Art zu schaffen.

Erfindungsgemäß wird die Aufgabe dadurch gelöst, dass die Hülse an zumindest einem Ende, an dem das Verbindungsglied in die Hülse eingesetzt ist, eine Wandverdickung aufweist, das Verbindungsglied vollständig ummantelt und an dem Ende einfasst.

Durch Einbettung des Seils in das weichere Material wird die Gefahr, dass am Seil beim Aufbringen der Krafteinleitungseinrichtung oder bei der späteren Nutzung der Kraftübertragungseinheit durch die Einwirkung von Kräften und mechanischen Belastungen, die durch die Krafteinleitungseinrichtung auf das Seil ausgeübt werden, Beschädigungen auftreten, erheblich verringert. Dadurch werden Seilbrüche vermieden und die Lebensdauer der Kraftübertragungseinheit verlängert.

Die Hülse ist zweckmäßigerweise aus einem Bau- oder einem Vergütungsstahl gebildet.
Das Verbindungsglied besteht in der bevorzugten Ausführungsform der Erfindung aus einer Aluminium- oder einer Kupferlegierung oder einem niedrig legierten Stahl.

In einer Ausgestaltung der Erfindung weisen die Hülse und/oder das Verbindungsglied zumindest abschnittsweise eine hohlzylindrische Form auf. Zweckmäßigerweise sind die Formen der Hülse und des Verbindungsglieds derart aneinander angepasst, dass die Hülse das Verbindungsglied vollständig ummantelt, sodass das Verbindungsglied durch die Hülse gegen Einwirkungen von außen geschützt ist.
Als besonders vorteilhaft hat sich erwiesen, die Krafteinleitungseinrichtung zur vollständigen Ummantelung des Verbindungsglieds derart vorzusehen, dass die Hülse zumindest an ihrem einen Ende mit ihrer das Seil umschließenden Innenseite an der Mantelfläche des Seils anliegt. Durch diese Maßnahme fasst die Hülse das Verbindungsglied ein, sodass zwischen der Hülse und dem Verbindungsglied ein Formschluss erreicht wird.
In einer besonders bevorzugten Ausführungsform der Erfindung nimmt die Wanddicke des Verbindungsglieds in einem Endabschnitt der Kraftübertragungseinheit zumindest zu einem Ende der Krafteinleitungseinrichtung hin ab und die Wanddicke der Hülse unter Ausgleich der abnehmenden Wanddicke des Verbindungsglieds zu dem Ende hin zu. Vorteilhaft ist dadurch in dem Bereich am Ende der Krafteinleitungseinrichtung, in dem bei Belastung der Kraftübertragungseinheit große Kräfte anliegen können, an der Hülse eine Materialverstärkung gebildet. Ferner lässt sich die Hülse derart vorsehen, dass sie unter Einfassung des Verbindungsglieds einen im Wesentlichen einheitlichen Außendurchmesser aufweist.

In einer weiteren Ausgestaltung der Erfindung sind die Hülse und das Verbindungsglied zur verstärkten formschlüssigen Verbindung, vorzugsweise zwischen der Innenfläche der Hülse und der Außenfläche des Verbindungsglieds, miteinander verzahnt.

Zweckmäßigerweise ist zumindest die Hülse einseitig geschlossen, um das Verbindungsglied und das Seil topfartig aufzunehmen.
Die Hülse kann ferner mit Mitteln zur Verbindung der Krafteinleitungseinrichtung versehen sein, z.B. einer Öse oder anderen Verbindungs- oder Kupplungselementen.

Die zur Herstellung der Kraftübertragungseinheit zu verwendende Hülse weist in einer Ausgestaltung der Erfindung im noch nicht verformten Zustand die Form eines Hohlzylinders auf und ist an dem zumindest einen Ende mit der Wandverdickung versehen, die durch den umlaufenden Vorsprung gebildet ist.
Durch die Wandverdickung lässt sich beim Umformen der Hülse und des Verbindungsglieds auf das Seil die in der Kraftübertagungseinheit vorgesehene Form erreichen, in der die Wanddicke der Hülse zu dem zumindest einen Ende hin zunimmt, während die Wanddicke des Verbindungsstücks abnimmt. Die Wandverdickung ist in der bevorzugten Ausführungsform der Erfindung durch einen Kragen auf der Außenseite der Hülse gebildet.
Ferner wäre es vorstellbar, die Wandverdickung auf der Außenseite und auf der Innenseite der Hülse vorzusehen.

Ist die Hülse, wie nach einer weiteren Ausführungsform der Erfindung vorgesehen, an ihren beiden Enden mit der Wandverdickung versehen, eignet sich die Kraftübertragungseinrichtung auch zur Verbindung zweier Seile miteinander an deren Enden.

Um die beabsichtigte Formgebung zu unterstützen, weist das Verbindungsglied vor der Umformung zweckmäßigerweise an dem einen Ende eine verringerte Wanddicke auf, die vorzugsweise durch eine an der Außenseite oder/und der Innenseite des Verbindungsglieds vorgesehene Fase gebildet ist.

Zweckmäßigerweise ist die Hülse auf ihrer Innenseite mit einer zahnartigen Formung, vorzugsweise mit einer Gewindestruktur, versehen, durch die sie beim Aufbringen der Hülse auf das Verbindungsglied und das Seil mit dem Verbindungsglied formschlüssig verbunden wird. Wenn die aus dem festeren Material gebildete Hülse auf das Verbindungsglied gepresst, gehämmert oder gewalzt wird, wird die Formung in die Außenwand des weicheren Verbindungsglieds gedrückt und Hülse und Verbindungsstück werden miteinander verzahnt.

Zur Herstellung der Krafteinleitungseinrichtung wird zunächst das Verbindungsglied auf das Seil aufgesetzt und anschließend auf das Seil aufgepresst, aufgehämmert und/oder aufgewalzt, sodass zwischen dem Seil und dem Verbindungsglied ein Formschluss erreicht wird. Der Innendurchmesser des Verbindungsglieds ist zweckmäßigerweise geringfügig, vorzugsweise bezogen auf den Außendurchmesser des Seils um 4 bis 10 % größer als der Außendurchmesser, sodass es sich ohne großes Spiel auf das Seil aufsetzen lässt.
Anschließend wird die Hülse auf das bereits auf das Seil geformte Verbindungsglied aufgeschoben und auf dieses aufgepresst, aufgehämmert und/oder aufgewalzt, wobei die Hülse mit dem Verbindungsglied und dem Seil verbunden wird. Zweckmäßigerweise ist der Innendurchmesser der Hülse dazu geringfügig, vorzugsweise bezogen auf den Außendurchmesser des auf das Seil verpressten, gehämmerten oder gewalzten Verbindungsglieds um 1 bis 2 % größer als dieser Außendurchmesser.

Alternativ kann die Krafteinleitungseinrichtung auch dadurch hergestellt werden, dass das Verbindungsglied und die Hülse vor der Umformung auf das Seil aufgesetzt und anschließend gemeinsam auf das Seil aufgepresst, aufgehämmert und/oder aufgewalzt werden.
Dazu sind die Hülse und das Verbindungsglied in ihren Bemaßungen sowohl aneinander als auch an das Seil, mit dem die Kraftübertragungseinheit gebildet werden soll, angepasst. Der Innendurchmesser des Verbindungsglieds ist, wie oben beschrieben, an den Außendurchmesser des Seils angepasst, sodass es sich ohne großes Spiel auf das Seil aufsetzen lässt. Die Hülse weist einen Innendurchmesser auf, der geringfügig, vorzugsweise bezogen auf den Außendurchmesser des Verbindungsstücks 1 bis 4 % größer ist als dieser Außendurchmesser, sodass sich die Hülse ohne großes Spiel auf das Verbindungsstück aufsetzen lässt.

Bei der Umformung wird die Hülse derart verformt, dass sie danach einen im Wesentlichen gleichmäßig großen Außendurchmesser aufweist. Dabei wird die Hülse an dem Ende, an dem die Wandverdickung vorgesehen ist, stärker verformt als im restlichen Bereich. Das im Bereich der Wandverdickung ursprünglich auf der Außenseite vorstehende Material wird radial nach innen gedrückt und füllt dabei den Raum, der aufgrund der an dem Ende abnehmenden Wanddicke des Verbindungsglieds freigelassenen ist.

Im Folgenden wird die Erfindung anhand von Ausführungsbeispielen und der beiliegenden, sich auf diese Ausführungsbeispiele beziehenden Zeichnungen näher erläutert. Es zeigen
- Fig. 1: schematisch eine erfindungsgemäße Kraftübertragungseinheit im Schnitt,
- Fig. 2: ein Mittel zur Herstellung der erfindungsgemäße Kraftübertragungseinheit in verschiedenen Ansichten,
- Fig. 3: ein weiteres Mittel zur Herstellung der erfindungsgemäße Kraftübertragungseinheit in verschiedenen Ansichten, und
- Fig. 4: ein weiteres Mittel zur Herstellung der erfindungsgemäßen Kraftübertragungseinheit in verschiedenen Ansichten.

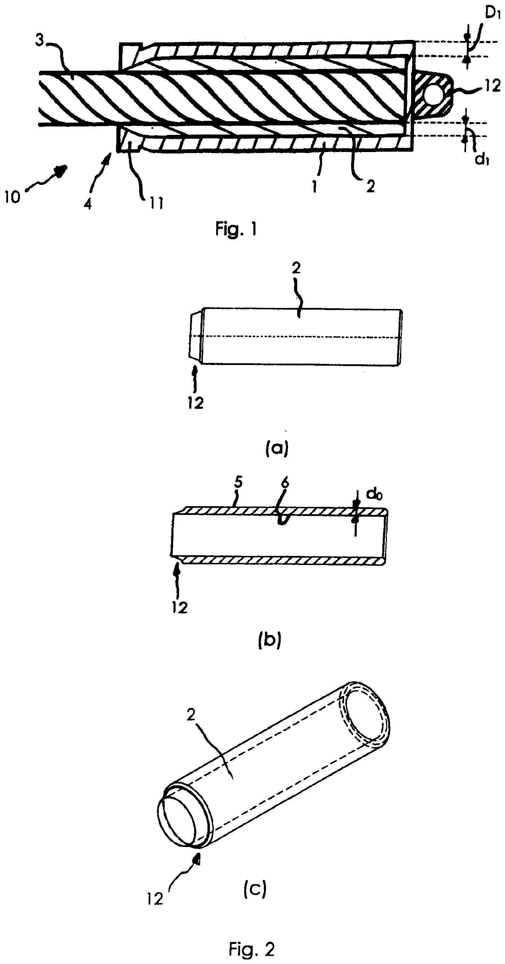

Eine in Fig. 1 gezeigt erfindungsgemäße Kraftübertragungseinheit 10 umfasst ein Drahtseil 3 mit aus Stahl gebildeten Außenlitzen, ein auf dem Drahtseil 3 aufsitzendes Verbindungsglied 2 aus einer Aluminiumlegierung und eine Hülse 1 aus Baustahl, die das Verbindungsglied 2 einfasst.
Das Verbindungsglied 2 weist eine hohlzylindrische Form auf und sitzt in der ebenfalls hohlzylindrischen Hülse 1, die einseitig geschlossen eine topfartige Form aufweist und an ihrem geschlossenen Ende mit einer Öse 12 versehen ist.
Auf der der geschlossenen Seite der Hülse 1 gegenüberliegenden Seite nimmt die Wandstärke D₁ der Hülse in dem gleichen Maße zu wie die Wandstärke d₁ des Verbindungsstücks 2 abnimmt, so dass die Hülse 1 an ihrem einen Ende mit seiner Innenseite an dem Drahtseil anliegt und das Verbindungsglied 2 auch in axialer Richtung gesehen umschließt, dabei aber einen im Wesentlichen einheitlich großen Außendurchmesser aufweist.

Die Hülse 1 und das Verbindungsglied 2 sind, wie nachfolgend erläutert ist, unter Umformung auf das Drahtseil 3 aufgepresst worden. Zwischen der Hülse 1 und dem Verbindungsglied 2 ist durch die Einfassung am Ende 4 der Hülse 1 und durch eine in Fig. 1 nicht gezeigte Verzahnung zwischen der Innenseite 8 der Hülse 1 und der Außenseite 5 des Verbindungsglieds 2 eine formschlüssige Verbindung hergestellt. Ferner besteht zwischen dem Drahtseil 3 und dem Verbindungsglied 2 Formschluss, da das Verbindungsglied 2 beim Verpressen in Unebenheiten an der Oberfläche des Drahtseils hineingepresst worden ist.

Da das Verbindungsglied 2 aus einem weicheren Material besteht als die Außenlitzen des Drahtseils 3, wird das Drahtseil 3 beim Aufpressen der Hülse 1 und des Verbindungsglieds 2 auf das Drahtseil 3 weniger stark mechanisch belastet als dies bei bekannten Kraftübertragungseinheiten der Fall ist, bei denen die Stahlhülse direkt auf das Seil gepresst wird. Dadurch werden Beschädigungen, z.B. Kerbschläge an einzelnen Drähten, und damit der Bruch des Drahtseils 3 vermieden. Die Lebensdauer der Kraftübertragungseinheit 10 ist deshalb im Vergleich zu den bekannten Kraftübertragungseinheiten größer.

Zur Herstellung der Kraftübertragungseinheit 10 wird zunächst das in Fig. 2 in verschiedenen Ansichten näher gezeigte Verbindungsglied 2 auf das Drahtseil 3 aufgeschoben.
Dazu weist das Verbindungsglied 2 einen derartigen Innendurchmesser auf, dass es sich lose mit geringem Spiel auf das Drahtseil 3 aufschieben lässt.
Wie insbesondere Fig. 2b zu entnehmen ist, weist das Verbindungsglied 2 an seinem einen Ende eine Fase 12 auf, an der die Wandstärke do des Verbindungsglieds 2 zu seinem Ende hin abnimmt.
Danach wird das Verbindungsglied 2 auf das Drahtseil 3 aufgepresst, sodass sich das Material des Verbindungsglieds 2 und die Außenlitzen des Drahtseils 3 gebildeten Unebenheiten an der Drahtseiloberfläche hineindrückt und ein Formschluss gebildet wird. Danach wird das Drahtseil 3 an dem Ende des Verbindungsglieds 2, das dem mit der Fase 12 versehenen Ende gegenüberliegt, durchtrennt.

Anschließend wird die Hülse 1 auf das Verbindungsglied 2 aufgeschoben.

Der Innendurchmesser der Hülse 1 ist derart gewählt, dass sich die Hülse 1 lose auf das auf dem Drahtseil 3 verpresste Verbindungsglied 2 aufschieben lässt.

Die Hülse 1 ist auf ihrer Innenseite 8 mit einem hier nicht näher gezeigten Gewinde 9 versehen und weist an ihrem einen Ende nach außen hin eine kragenartige Wanddickenvergrößerung 11 auf, die durch einen auf der Außenseite der Hülse vorgesehenen umlaufenden Vorsprung gebildet ist. An dem anderen Ende ist die Hülse 1 topfartig geschlossen und mit einer Öse 12 versehen, über die sich die Kraftübertragungseinheit 10 mit einem Gegenstand verbinden lässt.

Zur Herstellung der erfindungsgemäßen Kraftübertragungseinrichtung 10 wird an die Hülse 1 ein Presswerkzeug angesetzt und die Hülse derart gepresst, dass sie abgesehen von einer Unebenheit an der Wanddickenverstärkung 11 einen gleichmäßigen Außendurchmesser aufweist. Dabei wird insbesondere die Hülse 1 im Bereich der vergrößerten Wanddicke stärker verformt als der restliche Bereich der Hülse 1. Der durch die Fase 1 gebildete frei bleibende Bereich des Verbindungsglieds 2 wird unter Materialfluss mit dem Hülsenmaterial aufgefüllt, so dass sich die in Fig. 1 gezeigte Struktur bildet. Die Wandstärken der Hülse 1 und des Verbindungsglieds 2 werden dabei von ihren Wanddicken D₀ bzw. d₀ auf D₁ bzw. d₁ reduziert.

Beim Verpressen der Hülse 1 wird die Gewindestruktur 9 an der Innenseite 8 der Hülse in die Außenseite 5 des Verbindungsglieds 2 hineingepresst, und es wird eine Verzahnung zwischen der Hülse 1 und dem Verbindungsglied 2 gebildet.

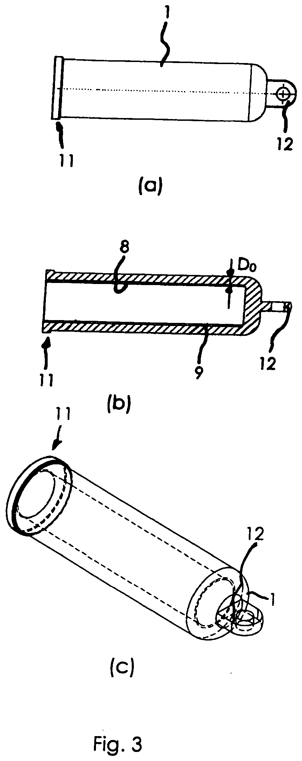

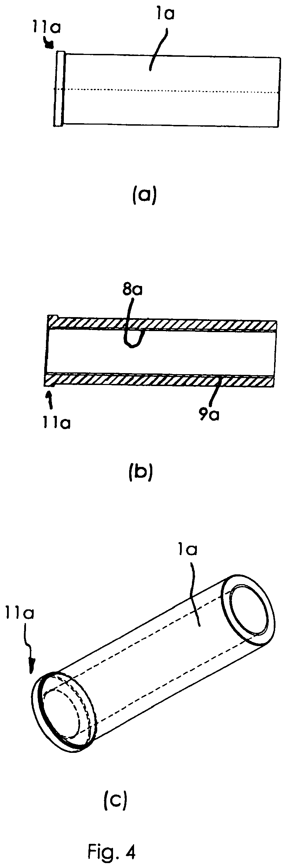

Alternativ kann zur Herstellung der Kraftübertragungseinrichtung 10 auch die in Fig. 4 gezeigte Hülse 1a verwendet werden, die im Unterschied zu der Hülse nach Fig. 3 an ihren beiden Enden offen ist.

In einem weiteren, hier nicht gezeigten Ausführungsbeispiel ist eine Hülse an ihren beiden Enden offen und an den beiden Enden mit den oben beschriebenen kragenartigen Wanddickenvergrößerungen versehen. Eine mit dieser Hülse und einem entsprechend angepassten Verbindungsglied herstellbare Kraftübertragungseinrichtung kann insbesondere zur Verbindung zweier Seile miteinander an ihren Enden genutzt werden. Dazu werden die Enden der Seile in das Verbindungsglied eingesteckt und anschließend das Verbindungsglied und die Hülse, ggf. gleichzeitig, auf die Seilenden aufgebracht. Es versteht sich, dass das dazu vorgesehene Verbindungsglied an seinen Enden, wie oben beschrieben, mit einer Fase versehen sein kann.

In einem weiteren Ausführungsbeispiel kann die Kraftübertragungseinrichtung 10 auch dadurch hergestellt werden, dass die Hülse 1,1a und das Verbindungsglied 2 gleichzeitig auf dem Drahtseil 3 verpresst werden. Der Formschluss zwischen dem Drahtseil 3, dem Verbindungsglied 2 und der Hülse 1,1a wird dann in dem einen Verfahrensschritt erreicht. Gleichzeitig wird die Innenseite 6 der Hülse 1 gegen die Außenlitzen des Drahtseils 3 verpresst und drückt sich in und gleichmäßige Formungen an der Drahtseiloberfläche ein. Auf diese Weise wird ein Formschluss sowohl der Hülse 1 und dem Verbindungsglied 2 als auch zwischen dem Verbindungsglied 2 und dem Drahtseil 3 erreicht.

## Patentansprüche

1. Kraftübertragungseinheit, die ein Seil (3), insbesondere ein Drahtseil, und eine Einrichtung zur Einleitung einer Kraft in das Seil (3) aufweist und eine einen Endabschnitt des Seils (3) umschließende und unter Umformung mit dem Seil (3) verbundene Hülse (1) umfasst, wobei ein zwischen der Hülse (1) und dem Seil (3) angeordnetes Verbindungsglied (2) vorgesehen ist, das aus einem Material gebildet ist, welches eine geringere Festigkeit aufweist als die Materialien, aus denen die Hülse (1) und eine Außenfläche des Seils (3) gebildet sind,
**dadurch gekennzeichnet,**
**dass** die Hülse (1) an zumindest einem Ende (4), an dem das Verbindungsglied (2) in die Hülse (1) eingesetzt ist, eine Wandverdickung (11) aufweist, das Verbindungsglied (2) vollständig ummantelt und an dem Ende (4) einfasst.

2. Kraftübertragungseinheit nach Anspruch 1,
**dadurch gekennzeichnet,**
**dass** die Hülse (1) zumindest an ihrem einen Ende mit ihrer das Seil (3) umschließenden Innenseite an dem Seil (3) anliegt.

3. Kraftübertragungseinheit nach Anspruch 1 oder 2,
**dadurch gekennzeichnet,**
**dass**, vorzugsweise lediglich in einem Endabschnitt der Krafteinleitungseinrichtung, die Wanddicke (d₁) des Verbindungsglieds (2) zu einem Ende (4) der Krafteinleitungseinrichtung hin abnimmt und die Wanddicke (D₁) der Hülse (1) unter Ausgleich der abnehmenden Wanddicke (d) des Verbindungsglieds (2) zu dem Ende (4) hin zunimmt.

4. Mittel zur Herstellung einer Kraftübertragungseinheit für ein Seil (3), insbesondere ein Drahtseil, die eine Hülse (1), die zum Umschließen eines Endabschnitts des Seils (3) vorgesehen ist und die durch Umformung mit dem Seil (3) verbindbar ist, sowie ein auf das Seil (3) aufsetzbares und in die Hülse (1) einsetzbares Verbindungsglied (2) umfasst, das aus einem Material gebildet ist, das eine geringere Festigkeit aufweist als die Materialien, aus denen das Hülsenteil (1) und die Außenfläche des Seils (3) gebildet sind,
**dadurch gekennzeichnet,**
**dass** die Hülse (1) und/oder das Verbindungsglied (2) eine hohlzylindrische Form aufweisen, wobei die Hülse (1) an zumindest einem Ende (4), an dem das Verbindungsglied (2) in die Hülse (1) eingesetzt ist, eine Wandverdickung (11) aufweist, und eine derartige Form aufweist, dass sie das Verbindungsglied (2) nach der Umformung einfasst und nach außen vollständig ummantelt.

5. Mittel nach Anspruch 4,
**dadurch gekennzeichnet,**
**dass** das Verbindungsglied (2) an zumindest einem Ende (4) eine verringerte Wanddicke (do) aufweist.

6. Mittel nach Anspruch 4 oder 5,
**dadurch gekennzeichnet,**
**dass** an einem Ende des Verbindungsglieds (2) an dessen Außenseite (5) oder/und dessen Innenseite (6) eine Fase gebildet ist.

7. Mittel nach einem der Ansprüche 4 bis 6,
**dadurch gekennzeichnet,**
**dass** die Hülse (1) an zumindest einem Ende (7) eine vergrößerte Wanddicke (D₀) aufweist.

8. Mittel nach Anspruch 7,
**dadurch gekennzeichnet,**
**dass** an dem zumindest einen Ende (4) der Hülse (1) ein Kragen (11) gebildet ist.

9. Mittel nach einem der Ansprüche 4 bis 8,
**dadurch gekennzeichnet,**
**dass** die Hülse (1) und das Verbindungsglied (2) in ihren Formen, insbesondere in ihren Wanddicken (do,Do), ihren Größen und ihren Längen, derart aneinander angepasst sind, dass die Hülse (1) nach der Umformung an zumindest einem Ende (4) mit ihrer das Seil (3) umschließenden Innenseite (8) an dem Seil (3) anliegt.

10. Verfahren zur Herstellung einer Kraftübertragungseinheit (10), insbesondere einer Kraftübertragungseinheit nach den Ansprüchen 1 bis 3 unter Verwendung der Mittel nach den Ansprüchen 4 bis 9, die ein Seil (3), insbesondere ein Drahtseil, und eine Einrichtung zur Einleitung von Kräften in das Seil (3) aufweist, bei dem auf das Seil (3) eine einen Endabschnitt des Seils (3) umschließende Hülse (1) aufgebracht wird und die Hülse (1) unter Umformung mit dem Seil (3) verbunden wird, wobei vor der Umformung zwischen der Hülse (1) und dem Seil (3) ein Verbindungsglied (2) angeordnet wird, das aus einem Material gebildet ist, das eine geringere Festigkeit aufweist als die Materialien, aus denen die Hülse (1) und äußere Litzen des Seils (3) gebildet sind,
**dadurch gekennzeichnet,**
**dass** die Hülse (1), die zumindest an einem Ende (4), an dem das Verbindungsglied (2) in die Hülse (1) eingesetzt wird, eine Wandverdickung (11) aufweist, und die Hülse (1) derart auf das Verbindungsglied (2) und das Seil (3) aufgebracht wird, dass die Hülse (1) das Verbindungselement (2) einfasst und vollständig ummantelt.

11. Verfahren nach Anspruch 10,
**dadurch gekennzeichnet,**
**dass** die Hülse (1), das Verbindungsglied (2) und das Seil (3) derart miteinander verbunden werden, dass, vorzugsweise lediglich in einem Endabschnitt der Krafteinleitungseinrichtung, die Wanddicke (d) des Verbindungsglieds (2) zu einem Ende (4) einer Krafteinleitungseinrichtung (10) hin, die durch das Verbindungsglied (2) und die Hülse (1) gebildet ist, abnimmt und die Wanddicke (D) der Hülse (1) zu dem Ende (4) hin zunimmt.

12. Verfahren nach Anspruch 10 oder 11,
**dadurch gekennzeichnet,**
**dass** die Hülse (1) derart auf das Verbindungsglied (2) und das Seil (3) aufgebracht wird, dass die Hülse (1) mit ihrer das Seil (3) umschließenden Innenseite an dem Seil (3) anliegt.

13. Verfahren nach einem der Ansprüche 10 bis 12,
**dadurch gekennzeichnet,**
**dass** die Hülse (1) oder/und das Verbindungsglied (2) auf das Seil (3) gepresst, gehämmert oder/und gewalzt werden.

## Claims

1. Force transmission unit which has a cable (3), in particular a wire cable, and a device for the introduction of a force into the cable (3), and comprises a sleeve (1) which encloses an end section of the cable (3) and is connected under deformation to the cable (3), a connecting member (2) which is arranged between the sleeve (1) and the cable (3) being provided, which connecting member (2) is formed from a material which has a smaller strength than the materials from which the sleeve (1) and an outer face of the cable (3) are formed,
**characterized**
**in that** the sleeve (1) has a thickened wall portion (11) at at least one end (4) at which the connecting member (2) is inserted into the sleeve (1), encases the connecting member (2) completely and surrounds it at the end (4).

2. Force transmission unit according to Claim 1,
**characterized in that**,
at least at its one end, the sleeve (1) bears against the cable (3) by way of its inner side which encloses the cable (3).

3. Force transmission unit according to Claim 1 or 2,
**characterized**
**in that**, preferably merely in an end section of the force introduction device, the wall thickness (d₁) of the connecting member (2) decreases towards an end (4) of the force introduction device, and the wall thickness (D₁) of the sleeve (1) increases towards the end (4) with a compensation of the decreasing wall thickness (d) of the connecting member (2).

4. Means for producing a force transmission unit for a cable (3), in particular a wire cable, which force transmission unit comprises a sleeve (1) which is provided for enclosing an end section of the cable (3) and can be connected under deformation to the cable (3), and a connecting member (2) which can be placed onto the cable (3), can be inserted into the sleeve (1), and is formed from a material which has a smaller strength than the materials from which the sleeve part (1) and the outer face of the cable (3) are formed,
**characterized**
**in that** the sleeve (1) and/or the connecting member (2) have/has a hollow-cylindrical shape, the sleeve (1) having a thickened wall portion (11) at at least one end (4) at which the connecting member (2) is inserted into the sleeve (1), and having a shape such that it surrounds the connecting member (2) after the deformation and encases it to the outside completely.

5. Means according to Claim 4,
**characterized**
**in that** the connecting member (2) has a decreased wall thickness (d₀) at at least one end (4).

6. Means according to Claim 4 or 5,
**characterized**
**in that** a chamfer is formed at an end of the connecting member (2) on its outer side (5) and/or its inner side (6) .

7. Means according to one of Claims 4 to 6,
**characterized**
**in that** the sleeve (1) has an increased wall thickness (D₀) at at least one end (7).

8. Means according to Claim 7,
**characterized**
**in that** a collar (11) is formed at the at least one end (4) of the sleeve (1).

9. Means according to one of Claims 4 to 8,
**characterized**
**in that** the sleeve (1) and the connecting member (2) are adapted to one another in terms of their shapes, in particular in terms of their wall thicknesses (d₀, D₀), their sizes and their lengths, in such a way that, after the deformation, the sleeve (1) bears against the cable (3) at at least one end (4) by way of its inner side (8) which encloses the cable (3).

10. Method for producing a force transmission unit (10), in particular a force transmission unit according to Claims 1 to 3 with the use of the means according to Claims 4 to 9, which force transmission unit (10) has a cable (3), in particular a wire cable, and a device for the introduction of forces into the cable (3), in the case of which method a sleeve (1) which encloses an end section of the cable (3) is applied to the cable (3), and the sleeve (1) is connected under deformation to the cable (3), a connecting member (2) being arranged between the sleeve (1) and the cable (3) before the deformation, which connecting member (2) is formed from a material which has a smaller strength than the materials from which the sleeve (1) and outer strands of the cable (3) are formed,
**characterized**
**in that** the sleeve (1) which has a thickened wall portion (11) at least at one end (4) at which the connecting member (2) is inserted into the sleeve (1), and the sleeve (1) is applied to the connecting member (2) and the cable (3) in such a way that the sleeve (1) surrounds the connecting element (2) and encases it completely.

11. Method according to Claim 10,
**characterized**
**in that** the sleeve (1), the connecting member (2) and the cable (3) are connected to one another in such a way that, preferably merely in an end section of the force introduction device, the wall thickness (d) of the connecting member (2) decreases towards an end (4) of a force introduction device (10) which is formed by way of the connecting member (2) and the sleeve (1), and the wall thickness (D) of the sleeve (1) increases towards the end (4).

12. Method according to Claim 10 or 11,
**characterized**
**in that** the sleeve (1) is applied to the connecting member (2) and the cable (3) in such a way that the sleeve (1) bears against the cable (3) by way of its inner side which encloses the cable (3).

13. Method according to one of Claims 10 to 12,
**characterized**
**in that** the sleeve (1) and/or the connecting member (2) are/is pressed, hammered and/or rolled onto the cable (3) .

## Revendications

1. Unité de transfert de force, qui présente un câble (3), en particulier un câble métallique, et un dispositif pour introduire une force dans le câble (3) et une gaine (1) entourant une section d'extrémité du câble (3) et reliée au câble (3) avec une mise en forme, un élément de liaison (2) étant disposé entre la gaine (1) et le câble (3), lequel élément est constitué par un matériau qui présente une résistance inférieure à celle des matériaux qui forment la gaine (1) et une surface externe du câble (3), **caractérisée en ce que** la gaine (1) présente au niveau d'au moins une extrémité (4), au niveau de laquelle l'élément de liaison (2) est inséré dans la gaine (1), un épaississement de paroi (11) qui enveloppe complètement l'élément de liaison (2) et qui l'enferme au niveau de l'extrémité (4).

2. Unité de transfert de force selon la revendication 1, **caractérisée en ce que** la gaine (1) se place au moins au niveau de l'une extrémité avec sa face interne entourant le câble (3) contre le câble (3).

3. Unité de transfert de force selon la revendication 1 ou 2, **caractérisée en ce que**, de préférence uniquement dans une section d'extrémité du dispositif d'introduction de force, l'épaisseur de paroi (d₁) de l'élément de liaison (2) diminue vers une extrémité (4) du dispositif d'introduction de force et l'épaisseur de paroi (D₁) de la gaine (1) augmente vers l'extrémité (4) tout en compensant l'épaisseur décroissante de paroi (d) de l'élément de liaison (2)

4. Moyen pour réaliser une unité de transfert de force pour un câble (3), en particulier un câble métallique, qui comprend une gaine (1), destinée à entourer une section d'extrémité du câble (3) et pouvant être reliée au câble (3) par une mise en forme, ainsi qu'un élément de liaison (2) pouvant être placé sur le câble (3) et inséré dans la gaine (1), lequel élément de liaison est formé en un matériau qui présente une résistance inférieure à celle des matériaux dont la partie de gaine (1) et la surface externe du câble (3) sont formés, **caractérisé en ce que** la gaine (1) et/ou l'élément de liaison (2) présente(nt) une forme cylindrique creuse, la gaine (1) présentant au niveau d'au moins une extrémité (4), au niveau de laquelle l'élément de liaison (2) est inséré dans la gaine (1), un épaississement de paroi (11) et présentant une forme telle qu'elle enferme l'élément de liaison (2) après la mise en forme et l'enveloppe complètement vers l'extérieur.

5. Moyen selon la revendication 4, **caractérisé en ce que** l'élément de liaison (2) présente une épaisseur de paroi (d₀) réduite au niveau d'au moins une extrémité (4).

6. Moyen selon la revendication 4 ou 5, **caractérisé en ce qu'**un biseau est formé au niveau d'une extrémité de l'élément de liaison (2) au niveau de sa face externe (5) et/ou de sa face interne (6).

7. Moyen selon l'une quelconque des revendications 4 à 6, **caractérisé en ce que** la gaine (1) présente une épaisseur de paroi augmentée (D₀) au niveau d'au moins une extrémité (7).

8. Moyen selon la revendication 7, **caractérisé en ce qu'**une collerette (11) est formée au niveau de ladite au moins une extrémité (4) de la gaine (1).

9. Moyen selon l'une quelconque des revendications 4 à 8, **caractérisé en ce que** les formes de la gaine (1) et de l'élément de liaison (2) sont adaptées l'une à l'autre, en particulier en ce qui concerne leurs épaisseurs de paroi (d₀,D₀), leurs dimensions et leurs longueurs, de manière telle que la gaine (1) après la mise en forme se place au niveau d'au moins une extrémité (4) avec sa face interne (8) entourant le câble (3) contre le câble (3).

10. Procédé pour la fabrication d'une unité de transfert de force (10), en particulier d'une unité de transfert de force selon les revendications 1 à 3, avec utilisation des moyens selon les revendications 4 à 8, qui présente un câble (3), en particulier un câble métallique, et un dispositif pour introduire des forces dans le câble (3), dans lequel une gaine (1) entourant une section d'extrémité du câble (3) est appliquée sur le câble (3) et la gaine (1) est reliée au câble (3) avec une mise en forme, un élément de liaison (2) étant disposé entre la gaine (1) et le câble (3) avant la mise en forme, lequel élément étant constitué par un matériau qui présente une résistance inférieure à celle des matériaux qui forment la gaine (1) et les torons externes du câble (3), **caractérisé en ce que** la gaine (1) présente au niveau d'au moins une extrémité (4), au niveau de laquelle l'élément de liaison (2) est inséré dans la gaine (1), un épaississement de paroi (11) et la gaine (1) est appliquée sur l'élément de liaison (2) et le câble (3) de manière telle que la gaine (1) enferme l'élément de liaison (2) et l'enveloppe complètement.

11. Procédé selon la revendication 10, **caractérisé en ce que** la gaine (1), l'élément de liaison (2) et le câble (3) sont reliés les uns aux autres de manière telle que, de préférence uniquement dans une section d'extrémité du dispositif d'introduction de force, l'épaisseur de paroi (d) de l'élément de liaison (2) diminue vers une extrémité (4) d'un dispositif d'introduction de force, qui est formé par l'élément de liaison (2) et la gaine (1), et l'épaisseur de paroi (D) de la gaine (1) augmente vers l'extrémité (4).

12. Procédé selon la revendication 10 ou 11, **caractérisé en ce que** la gaine (1) est appliquée sur l'élément de liaison (2) et le câble (3) de manière telle que la gaine (1) se place avec sa face interne entourant le câble (3) contre le câble (3).

13. Procédé selon l'une quelconque des revendications 10 à 12, **caractérisé en ce que** la gaine (1) et/ou l'élément de liaison (2) est/sont pressé(s), martelé(s) et/ou laminé(s) sur le câble (3).
